Europäisches Patentamt

European Patent Office

Office européen des brevets

(11) Numéro de publication: **0 275 783 B1**

(12) **FASCICULE DE BREVET EUROPEEN**

(45) Date de publication de fascicule du brevet:
03.04.91

(21) Numéro de dépôt: **87402967.1**

(22) Date de dépôt: **23.12.87**

(51) Int. Cl.⁵: **F16D 65/16, B60T 13/74,**
**B60T 8/32**

(54) Procédé et dispositif d'actionnement d'un mécanisme de freinage par un moteur électrique rotatif.

(30) Priorité: **22.01.87 FR 8700707**

(43) Date de publication de la demande:
**27.07.88 Bulletin 88/30**

(45) Mention de la délivrance du brevet:
**03.04.91 Bulletin 91/14**

(84) Etats contractants désignés:
**DE ES FR GB IT SE**

(56) Documents cités:
**EP-A- 0 109 918**
**EP-A- 0 125 870**
**EP-A- 0 155 417**
**GB-A- 2 156 021**
**US-A- 2 039 509**

(73) Titulaire: **BENDIX EUROPE Services Techni-**
**ques S.A.**
**126 rue de Stalingrad**
**F-93700 Drancy(FR)**

(72) Inventeur: **Fargier, Eric**
**13, Av. du Maréchal Foch**
**F-93360 Neuilly-Plaisance(FR)**
Inventeur: **Pressaco, Pierre**
**45, rue Emile Zola - Bât C**
**F-93120 La Courneuve(FR)**

(74) Mandataire: **Lejet, Christian**
**Bendix Europe Service Techniques Service**
**Brevets 126 rue de Stalingrad**
**F-93700 Drancy(FR)**

Rank Xerox (UK) Business Services

## Description

La présente invention se rapporte à un procédé d'actionnement d'un mécanisme de freinage selon le préambule de la revendication 1. Elle concerne également le dispositif pour la mise en oeuvre du procédé et comprenant un poussoir mobile en translation pour appliquer les garnitures de friction sur au moins une pièce à freiner, un écrou susceptible de s'appuyer en translation sur ce poussoir et vissé sur une vis entraînée en rotation par une première roue d'engrenage coaxiale tournant à une première vitesse angulaire sous l'action d'un moteur, pour déplacer l'écrou et le poussoir à une première vitesse linéaire.

Depuis longtemps, on a tenté de réaliser le freinage de divers véhicules à roues à l'aide de moteurs électriques de freinage qui remplaceraient les moteurs à fluide, huile ou air comprimé, utilisés généralement jusque là pour le freinage des véhicules automobiles légers comme les automobiles, ou plus lourds comme les véhicules industriels et les véhicules ferroviaires. Indépendamment d'une moindre fiabilité de ces dispositifs du fait du risque permanent de coupure du circuit électrique plus fragile qu'un circuit de fluide, d'autres difficultés de réalisation ont contribué à rendre les freins à moteurs électriques peu pratiques par rapport aux freins à moteurs à fluide.

Ainsi, par exemple, le frein à moteur électrique pour un véhicule routier lourd et sa remorque décrit dans US-A-2 039 509, présentait l'avantage de remplacer les conduites de liaison à fluide entre les deux véhicules par un circuit électrique et d'obtenir des actionnements simultanés des freins du véhicule tracteur et de la remorque. Un tel frein qui utilisait des réducteurs à roue et vis sans fin et des systèmes à pignon et crémaillère pour la liaison mécanique entre le moteur électrique rotatif et la barre de la timonerie de freinage, s'est révélé présenter une hystérésis à l'actionnement serrage-desserrage qui supprimait pratiquement toute progressivité au freinage.

Plus récemment, on a proposé de réaliser des freins commandés par des moteurs électriques à l'aide d'un poussoir de freinage entraîné axialement par une vis à billes qui présente une faible hystérésis d'actionnement (néanmoins supérieure à celle des meilleurs moteurs à fluide) et qui peut être réversible, ce qui facilite le desserrage des freins sous l'effet de la force de réaction à l'application des garnitures de freinage. Ces moteurs de freins électriques à transmission par vis à billes se sont encore révélés inférieurs aux commandes à fluide connus du fait que, soit le pas de la vis à billes est trop grand et ne permet d'obtenir des efforts d'application des freins qu'au prix d'un encombrement exagéré, soit lorsque la vis à billes est plus compacte, le desserrage des freins se révèle "paresseux" par suite des difficultés à mettre la vis en rotation sous la seule force de réaction axiale et les temps de réponse au serrage (dans le cas où il existe des jeux importants à rattraper) et au desserrage sont trop longs.

La présente invention vise à pallier les inconvénients précités des freins à moteur électrique et à transmission par vis à billes et à obtenir un mécanisme d'actionnement d'un frein qui soit à la fois relativement insensible aux jeux fonctionnels au serrage des freins et apte à offrir une bonne modérabilité du freinage, si possible meilleure que celle des freins à fluide, et une vitesse de desserrage des freins très rapide, notamment pour pouvoir l'intégrer dans un circuit d'anti-blocage ou d'anti-enrayage des freins.

On atteint ces buts de l'invention avec un procédé dans lequel on entraîne simultanément l'écrou à une deuxième vitesse angulaire, inférieure à la première, de manière à déplacer axialement le poussoir à une vitesse linéaire différentielle proportionnelle à la différence de ces vitesses angulaires quand l'effort d'application des garnitures sur la pièce à freiner est en phase de croissance.

Selon un autre mode de réalisation du procédé, on couple la vis à une roue d'engrenage coaxiale entraînée par un moteur, notamment un moteur électrique, pour faire tourner la vis à la première vitesse angulaire, on mesure l'effort d'application des garnitures sur la pièce à freiner et on découple la roue d'engrenage de la vis quand cet effort dépasse un seuil prédéterminé. L'effort d'application est ainsi rendu relativement indépendant du rendement instantané de la vis.

Pour assurer un desserrage rapide du frein, on couple l'écrou à une deuxième roue d'engrenage coaxiale entraînée par ledit moteur pour faire tourner l'écrou à la deuxième vitesse angulaire, on mesure l'effort appliqué sur la pièce à freiner et l'on supprime le couple d'entraînement du moteur quand cet effort devient nul, au cours d'une phase de desserrage total du mécanisme de freinage.

Afin de bénéficier d'une forte amplification des efforts d'application, on provoque une translation du poussoir à faible vitesse dans le sens de l'application des garnitures de freinage quand l'effort d'application des garnitures sur la pièce à freiner est en phase de croissance, en choisissant des valeurs voisines pour la première et la deuxième vitesses angulaires.

Selon un autre mode de réalisation du procédé, la force de réaction à l'effort appliqué par les garnitures sur la pièce à freiner est transmise axialement par le poussoir à la deuxième roue d'engrenage pour coupler automatiquement par friction celle-ci en rotation à l'écrou.

Selon un mode de réalisation du procédé de l'invention améliorant beaucoup la sensibilité du freinage, on couple en rotation la vis et le moteur par excitation d'un embrayage électromagnétique. L'écrou est alors vissé sur la vis de façon réversible, dans une condition de vissage direct non différentiel et, pour desserrer les freins, on déclenche d'abord le débrayage de l'embrayage, libérant ainsi la vis en rotation pour que la force de réaction appliquée sur le poussoir provoque la mise en rotation de la vis en direction du desserrage des freins.

Selon encore un autre mode de réalisation pour réaliser un freinage de parc, on déclenche un freinage de service à vitesse linéaire différentielle, puis mécaniquement, on immobilise en rotation la vis.

En variante, on détecte l'effort axial d'application des garnitures du frein par la réaction appliquée à la vis et on débraye l'embrayage lorsque l'effort d'application du frein dépasse une valeur prédéterminée de consigne ou de seuil.

Selon une utilisation plus complexe du procédé selon l'invention, on désexcite et réexcite alternativement l'embrayage électromagnétique alors que le moteur reste en phase motrice, au cours d'une phase d'enrayage ou de blocage de la ou les roue-(s) d'un véhicule freiné par le mécanisme de freinage, de manière à provoquer alternativement le desserrage des freins par libération de la vis, suivi de la reprise du freinage par l'intermédiaire du moteur qui entraîne alors de nouveau le poussoir en translation à vitesse différentielle de serrage des freins.

L'on procède à des alternances rapides d'excitation-désexcitation de l'embrayage électromagnétique, de manière à transmettre à la vis un couple d'entraînement réduit correspondant sensiblement à l'adhérence disponible pour le freinage à friction sur les roues du véhicule freiné par le mécanisme de freinage.

Dans le procédé selon l'invention, au cours d'une phase de desserrage total des freins, on débraye l'embrayage, on surveille l'effort axial d'application du frein et on coupe l'alimentation du moteur seulement lorsqu'on détecte un effort résiduel d'application faible ou nul. La libre rotation de la vis se combine à l'entraînement en rotation de l'écrou par le moteur via la deuxième roue d'engrenage sous l'effet de l'effort de réaction du poussoir d'application, pour desserrer le frein.

Le dispositif pour la mise en oeuvre du procédé selon l'invention est caractérisé en ce qu'il comprend une deuxième roue d'engrenage entraînée par le même moteur et montée à rotation sur l'écrou coaxialement à celui-ci, un moyen pour coupler en rotation la deuxième roue et l'écrou sous l'action de l'effort transmis par le poussoir à cette roue d'engrenage quand les garnitures appliquent un effort sur la pièce à freiner, l'écrou et la deuxième roue étant alors entraînés en rotation par le moteur à une deuxième vitesse angulaire inférieure à la première vitesse angulaire pour déplacer l'écrou et le poussoir à une deuxième vitesse linéaire proportionnelle à la différence de ces vitesses angulaires, de manière à assurer par effet différentiel, une amplification de l'effort d'application des garnitures de freinage.

Un pignon assure simultanément la liaison du moteur avec les première et deuxième roues d'engrenage, montées coaxialement à la vis, le nombre de dents de la deuxième roue d'engrenage étant très légèrement supérieur à celui de la première pour autoriser la rotation coaxiale de ces deux roues malgré cette différence de nombre de dents.

Le vissage de la vis dans l'écrou est réalisé à l'aide d'un organe à filetage réversible, par exemple un chemin de billes, et la liaison entre l'arbre du pignon et la vis via le pignon et la première roue d'engrenage, comporte un embrayage de préférence un embrayage électromagnétique à actionnement électrique et à faible temps de réponse apte à être embrayé dans une phase de serrage des freins et à être débrayé dans une phase de desserrage des freins en autorisant la libre rotation de la vis alors réversible, sous l'effet de la force de réaction exercée sur le poussoir d'application.

Pour réaliser un freinage de parc, on déclenche un freinage de service et on actionne un organe de blocage mécanique de l'embrayage en position embrayée ou en position bloquée, cet organe mécanique immobilisant ainsi la vis et l'écrou pour empêcher le desserrage du frein. Le couplage des deux roues d'engrenage sur le même pignon s'oppose en outre mécaniquement au desserrage du frein serré initialement par voie électrique.

Selon deux modes de réalisation différents, la première roue d'engrenage est montée folle sur la vis et est susceptible d'être reliée en rotation à la vis par l'embrayage, ou bien la première roue d'engrenage est solidaire en rotation de la vis et engrène avec une partie du pignon qui est susceptible d'être reliée en rotation à l'arbre du pignon par l'intermediaire de l'embrayage qui est un embrayage électromagnétique à actionnement électrique et à faible temps de réponse.

La deuxième roue d'engrenage est susceptible d'être pincée entre la surface annulaire d'épaulement de l'écrou et une couronne d'organes de roulement, par exemple des billes ou des galets ou des aiguilles, en appui sur la surface d'épaulement annulaire du poussoir d'application entourant une partie de l'écrou.

Un ressort de compression est interposé entre une surface de butée du poussoir d'application et l'écrou, de manière à repousser cet écrou au contact d'une butée interne solidaire dudit poussoir et a créer un couple de friction minimal faible entre l'écrou et le poussoir d'application.

D'autres buts, avantages et caractéristiques apparaîtront à la lecture de la description de divers modes de réalisation de l'invention, faite à titre non limitatif et en regard du dessin annexé où:

- la figure 1     est une vue en coupe longitudinale d'un premier mode de réalisation selon l'invention d'un mécanisme d'actionnement d'un étrier de frein, le moteur électrique d'entraînement étant représenté;

- la figure 2     représente, en coupe longitudinale, un autre mode de réalisation selon l'invention pour un mécanisme d'actionnement d'un étrier de frein où le moteur électrique est extérieur au plan de coupe et l'embrayage est placé dans l'axe du pignon;

- la figure 3     représente, en coupe à plus grande échelle avec certaines parties omises, le mécanisme d'actionnement de la figure 2 selon le plan III-III de la figure 5;

- la figure 4     représente, en vue partielle en coupe selon le plan IV-IV de la figure 5, le moteur du mécanisme d'actionnement de l'étrier de frein et sa liaison cinématique de sortie;

- la figure 5     représente la vue en bout, carter enlevé, du mécanisme d'actionnement, en vue d'illustrer les liaisons tangentes des roues d'engrenage.

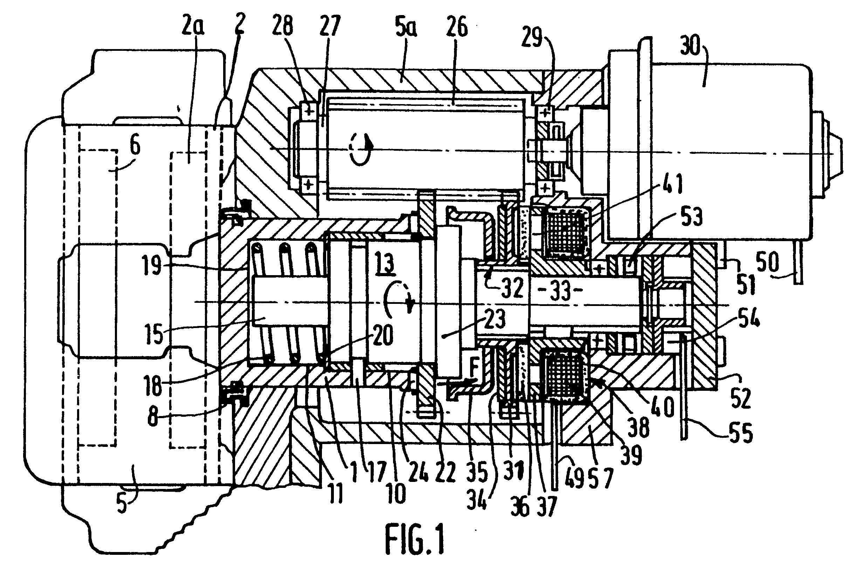

Si l'on se reporte plus particulièrement aux figures 1 à 3 où les éléments similaires portent les mêmes repères de référence, on voit que le mécanisme d'actionnement de l'étrier de frein à disque vise à agir par un poussoir 1 pour repousser une plaquette de garniture de frein 2 au contact de la piste de friction 3 d'un disque de frein 4 et, par réaction, tirer sur l'étrier de frein 5 (voir la figure 1) pour lui faire repousser une deuxième garniture de friction 6 et la plaquer sur une deuxième piste de friction du disque non représenté, afin de serrer simultanément les deux faces du disque.

Le poussoir 1 est guidé dans un alésage 7 de l'étrier 5 et se déplace en direction de la plaquette de friction 2. L'alésage 7 est protégé de tout risque de pénétration de substances polluantes grâce à l'interposition d'un soufflet annulaire élastique 8 entre une rainure périphérique de sortie 9 du poussoir et l'étrier 5.

Le poussoir 1 présente intérieurement deux alésages étagés 10 et 11 et porte dans l'alésage 10, par l'intermédiaire d'une bague intermédiaire 12, un écrou à billes 13. Cet écrou 13 présente intérieurement plusieurs chemins de billes 14 renfermés sur eux-mêmes et au contact desquels est vissée une vis à billes 15 à filets arrondis et à pas relativement grand, par exemple de l'ordre de 5mm à gauche dans les modes de réalisation des figures 1 à 3. L'écrou 13 présente une rainure annulaire intérieure 16 dans laquelle s'engage un téton 17 solidaire du poussoir 1. En position de repos, l'écrou 13 est repoussé en appui, par le flanc latéral de la rainure 16, sur le téton 17, par un ressort de compression 18 interposé entre le fond 19 de l'alésage 11 et une rondelle de friction 20 appliquée sur l'écrou 13.

L'écrou 13, présente à sa surface extérieure une portée 21 sur laquelle est montée coulissante une roue d'engrenage 22 qui sera dénommée plus loin deuxième roue d'engrenage et qui est interposée entre une surface d'épaulement annulaire 23 de l'écrou 13 et une couronne d'organes de roulement 24 en appui sur une surface d'épaulement annulaire 25 du poussoir 1. La roue d'engrenage 22 engrène avec un pignon 26 dont l'arbre de pignon 27 porte une longue denture droite ou hélicoïdale à faible inclinaison, et dont la longueur correspond au déplacement axial de l'écrou 13 et de la roue 22 qu'il porte. Cette longueur de déplacement axial tient compte de la course normale de fonctionnement du poussoir ainsi que de l'usure progressive des garnitures de frein qui se développe dans le temps et qui déplace vers la gauche des figures 1 à 3 le point de fonctionnement du poussoir. L'arbre 27 du pignon 26 est guidé à rotation dans des paliers 28 et 29 rendus solidaires d'un corps de mécanisme 5a et est relié mécaniquement à un moteur d'entraînement 30. Le moteur d'entraînement 30 peut être de types divers. On peut, par exemple, utiliser un moteur à aimants et à courant continu délivrant un couple sensiblement proportionnel au courant électrique de commande. Dans d'autres modes de réalisation, on pourrait employer un moteur à induction polyphasé et même un moteur pas à pas.

Selon le mode de réalisation de la figure 1, on voit que l'arbre de pignon 27 est accouplé directement au moteur électrique d'entraînement en rotation 30. La denture du pignon 26 engrène avec une autre roue d'engrenage 31 qui sera dénommée plus loin première roue d'engrenage et qui est montée folle, par l'intermédiaire d'une bague autolubrifiante, sur une portée 32 de l'arbre de vis 33 qui prolonge la vis 15 au-delà de la surface d'épaulement annulaire 23. La première roue 31 présente sur une face latérale un anneau intérieur de friction 34 destiné à recevoir l'appui d'un organe de blocage 35 commandé par le levier de frein de parc. Sur l'autre face latérale, la première roue d'engrenage 31 est reliée par des lamelles élastiques non représentées à un disque d'embrayage 36 en un matériau à bonne perméabilité magnétique, par exemple en acier doux, et qui est susceptible d'être attiré par magnétisme sur un plateau d'embrayage 37 à bonne perméabilité magnétique d'un embrayage électromagnétique 38. Le plateau d'embrayage 37 est claveté sur l'arbre de vis 33 par l'intermédiaire d'un moyeu qui entoure l'arbre 33 à l'intérieur d'une bobine électrique d'embrayage 39 logée à l'intérieur d'un anneau 40 à section en U dont les deux branches qui conduisent respectivement le flux magnétique intérieur à la bobine 39 et le flux extérieur à cette bobine, se terminent par des pôles qui font face aux parties pleines du plateau d'embrayage 37. Afin de permettre au flux magnétique créé par l'alimentation de la bobine 39 en courant électrique continu, de se refermer sur lui-même, une interruption 41 est prévue dans le plateau magnétique 37 en face de la bobine 39. Cette interruption peut être réalisée par tout moyen tel qu'un anneau de liaison en matériau non magnétique, par exemple en matière plastique ou laiton, ou bien par des séries de trous qui canalisent le flux magnétique à l'écart de cette interruption en l'obligeant à se refermer principalement par le plateau d'embrayage 36. D'une façon générale, l'embrayage 38 est réalisé sous la forme d'un embrayage électromagnétique à actionnement électrique et à très faible temps de réponse.

Selon une caractéristique importante du mécanisme de freinage selon l'invention, la première roue d'engrenage 31 et la deuxième roue d'engrenage 22 qui sont montées toutes les deux coaxialement sur l'arbre de vis 33 et qui engrènent toutes les deux avec le pignon 26, présentent des nombres de dents très légèrement différents. Selon le mode de réalisation produisant l'effet différentiel maximal, les nombres de dents des roues 31 et 22 diffèrent seulement d'une dent.

Dans une réalisation pratique, on a utilisé une vis 15 présentant un pas de 5 mm et un pignon 26 de seize dents engrenant avec une première roue 31 de trente huit dents et avec une deuxième roue 22 de trente neuf dents. Afin d'obtenir une première et une deuxième roues de même cercle primitif et dont le nombre de dents soit respectivement de trente huit et de trente neuf dents, on peut procéder au taillage avec correction de denture en décalant la crémaillère de taillage par rapport au centre du cercle de taillage. Lorsque les roues 31 et 22 sont engrenées toutes les deux sur le pignon 26, selon le même cercle primitif du fait qu'elles sont coaxiales, leurs angles de pression en service sont différents.

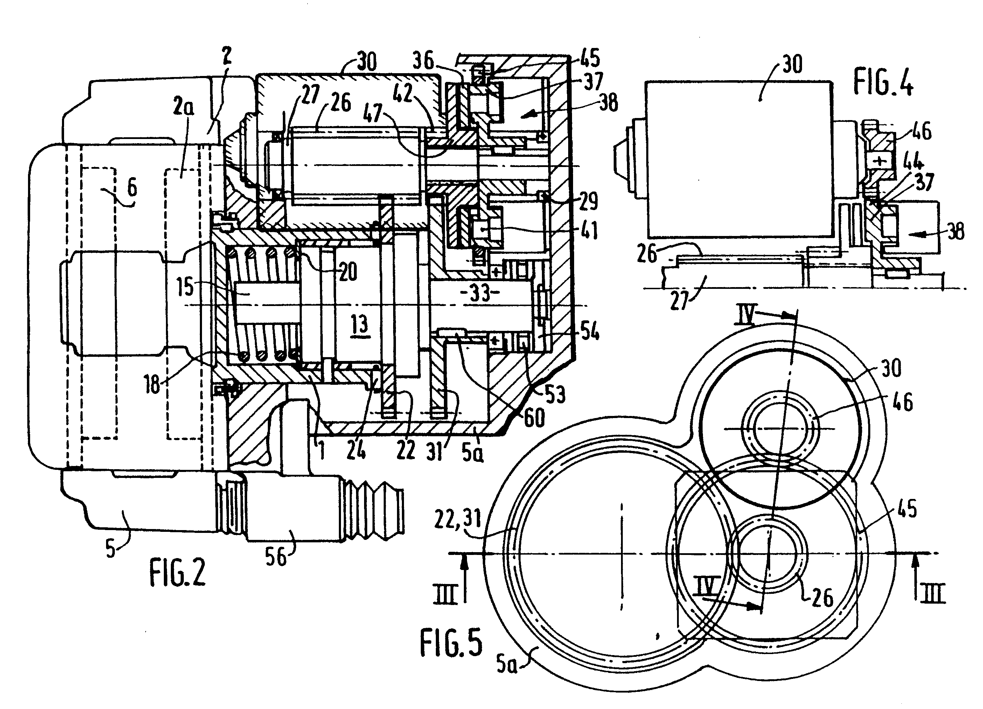

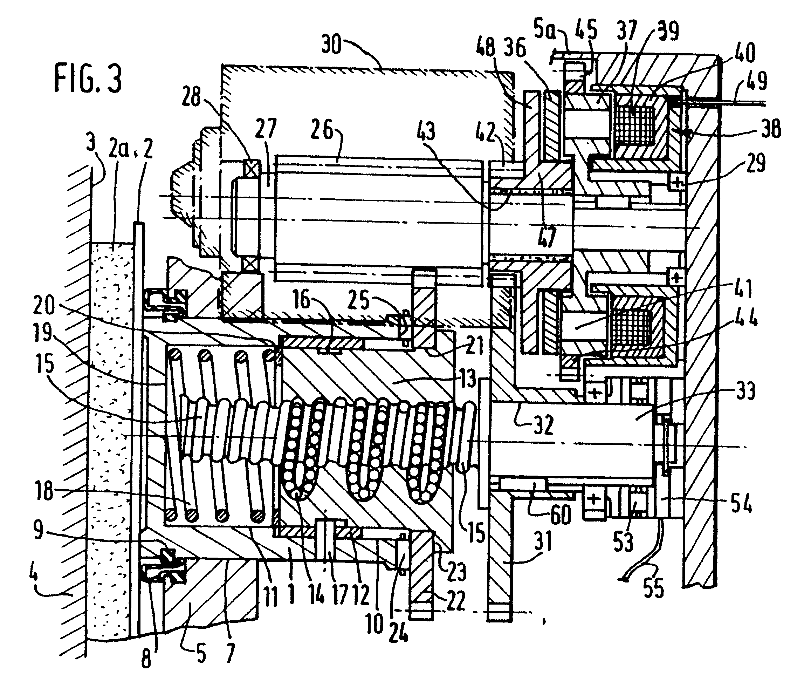

Dans le mode de réalisation représenté sur les figures 2 et 3, la première roue d'engrenage 31 est clavetée en 60 sur l'arbre de vis 33 et engrène avec une partie de pignon 42 tournant folle, par l'intermédiaire d'un palier mince 43 sur l'arbre de pignon 27 sur lequel est claveté un plateau d'embrayage 37 qui porte, à sa périphérie, une couronne 44 munie d'une denture 45.

Comme on le voit sur les figures 4 et 5, la denture 45 engrène avec le pignon de sortie 46 du moteur électrique d'entraînement 30. La partie de pignon tournant folle 42 est solidaire d'un moyeu 47 qui porte, par l'intermédiaire de lames élastiques, le disque d'embrayage magnétique 36 à bonne perméabilité, par exemple en acier doux, ce disque d'embrayage 36 étant soutenu axialement par un voile de support axial 48. L'embrayage 38 est relié par un circuit d'alimentation 49 à un bloc de commande électrique non représenté, la même chose étant réalisée pour le moteur électrique 30 par un circuit 50. Le moteur 30 est, par exemple, flasqué par des pattes périphériques 51 sur une plaque de fermeture 52 (voir la figure 1).

Selon une autre particularité de l'invention, l'arbre de vis 33 qui supporte axialement la totalité de la force de réaction du poussoir 1, c'est-à-dire de la force d'application des freins, est en appui axial par l'intermédiaire d'un palier axial 53, par exemple à rouleaux, sur un détecteur d'effort axial 54, par exemple à jauge de contrainte, relié par un circuit 55 à un bloc de contrôle non représenté.

On voit sur la figure 2 que le corps 5a du mécanisme d'actionnement du frein est relié à des colonnettes 56 de montage de l'étrier 5 sur un support tel qu'un flasque de roue. Dans le mode de réalisation de la figure 1, l'embrayage électromagnétique 38 et le détecteur d'effort axial 54 sont portés par un couvercle 57 rapporté sur le corps 5a et qui porte, par ailleurs, le moteur électrique 30 par la plaque de fermeture 52.

Le fonctionnement du mécanisme de freinage entraîné par un moteur électrique selon l'invention va maintenant être explicité.

On se référera tout d'abord à la figure 3 qui représente le mécanisme à l'échelle la plus grande. On suppose, comme représenté sur la figure, que les garnitures de friction 2a sont neuves et donc que l'écrou 13 est reculé au maximum vers la droite de la figure. Pour déclencher un freinage, par exemple à partir d'un potentiomètre actionné par la pédale de frein, on alimente simultanément le moteur de frein 30 en courant de freinage (lequel courant est en général proportionnel à la décélération demandée à la pédale de frein) et l'embrayage 38 en courant d'embrayage standard. Le moteur 30 se met à tourner en entraînant en rotation le pignon 26 et la partie de Pignon 42 via l'embrayage 38. La première roue d'engrenage 31 est ainsi entraînée en rotation avec la vis 15 qui se visse dans l'écrou 13, alors immobilisé en rotation par la friction de la base du ressort 18 sur la rondelle 20 et par la friction du flanc de la rainure 16 sur le téton 17 sous l'action du ressort de compression 18. La deuxième roue d'engrenage 22, également entraînée en rotation par le pignon 26, tourne folle sur la portée 21.

Dans un mode de réalisation particulier, le pignon 26 comporte seize dents et la première roue d'engrenage 31, trente huit dents. A chaque tour du pignon 26, l'écrou 13 et le poussoir 1, via le ressort 18, sont ainsi repoussés vers la gauche d'une fraction importante du pas de la vis 15, soit ici:

$$5 \text{ mm} \times \tfrac{16}{38} = 2,105 \text{ mm}$$

Le jeu fonctionnel entre les garnitures de frein 2a et la piste de friction 3 (celle du disque de frein en général) étant faible, de l'ordre de quelque dixièmes de millimètre et au plus 1 mm pour les freins de véhicules industriels lourds, la course à vide ou de rattrapage des jeux de l'écrou 13 est effective en un temps très bref, de l'ordre de quelques centièmes de seconde, malgré les inerties tournantes mises en jeu.

Dès que les jeux sont rattrapés, une force de réaction apparaît sur le poussoir 1, cette force étant exercée par la garniture de friction 2a écrasée sur la piste de friction 3. Cette force de réaction ou d'application des freins vient aussitôt serrer la deuxième roue d'engrenage 22 entre la portée 23 de l'écrou 13 et les organes de roulement 24 qui n'exercent qu'une faible friction sur la surface d'épaulement 25 du poussoir 1. La deuxième roue d'engrenage 22 se trouve ainsi embrayée sur l'écrou 13 qui se met alors à tourner à une vitesse légèrement inférieure à la vitesse de la vis 15, c'est-à-dire dans le rapport inverse des nombres de dents des première et deuxième roues d'engrenage 31 et 22. Ce rapport inverse était, dans le mode de réalisation envisagé, de 39/38.

L'effet de vis différentielle réduit ainsi le pas apparent de la vis dans le rapport de 1/39 et amplifie l'effort d'application des freins d'autant, à la diminution du rendement de la vis près.

Dès que l'effort d'application des freins apparaît, le moteur électrique 30 exerce, avec une faible vitesse d'avance du poussoir 1 de:

$$5 \text{ mm} \times \tfrac{16}{38} \times \tfrac{1}{39} = 5,4 \text{ centièmes de mm par}$$

tour du pignon 26,
un effort d'application des freins très important.

Le détecteur 54 de l'effort axial d'application des freins déclenche la coupure de l'excitation de l'embrayage 38 dès que l'effort d'application dépasse une valeur de consigne donnée par un organe de commande ou de surveillance du freinage.

Pour provoquer le desserrage des freins, si l'on coupait d'abord le courant dans le moteur électrique 30, le desserrage ne pourrait s'amorcer qu'au moment du débrayage de l'embrayage 38 par désexcitation de son bobinage 39 et la rémanence du circuit magnétique risquerait de retarder encore ce débrayage. Selon le procédé de l'invention, pour desserrer les freins, on coupe tout d'abord l'excitation de l'embrayage électromagnétique 38, ce qui interdit à la première roue d'engrenage 31, d'entraîner en rotation la vis 15. L'écrou 13 est alors entraîné en rotation par la deuxième roue d'engrenage 22 ce qui autorise la libre rotation de la première roue d'engrenage 31 sous l'action de la force de réaction exercée sur cette vis 15, alors réversible.

Lorsque le détecteur d'effort 54 a détecté la disparition de l'effort d'application des freins, l'alimentation du moteur 30 est alors coupée, sauf bien sûr en cas d'un nouvel actionnement de la pédale de frein par le conducteur. Auparavant, l'écrou 13 a continué de tourner par inertie sur une faible course, après la disparition de la force de réaction des garnitures de freinage, ce qui assure un jeu fonctionnel au desserrage entre les garnitures de friction 2a et la piste de friction 3.

Pour réaliser une action de frein de parc, on déclenche par une commande ad hoc le serrage des freins à partir de la rotation du moteur électrique 30 et l'on applique ensuite sur l'organe 35, qui comprend un levier amplificateur d'effort traversé par un câble de frein de parc, un effort dans la direction F à la figure 1. Cet effort F vient plaquer l'organe 35 sur l'anneau de friction 34, lequel mécaniquement immobilise la première roue d'engrenage 31 et l'oblige à se placer en position couplée sur l'arbre de vis 33. La vis 15 est ainsi immobilisée et, en outre, les deux roues d'engrenage 31 et 22 sont couplées simultanément avec le pignon 26 et l'effet de vis différentielle rend la vis à billes 13 irréversible ce qui interdit, de toute manière, après la coupure du courant dans le moteur 30 et dans l'embrayage 38, le desserrage des freins par voie mécanique, ces freins étant serrés électriquement auparavant. Si l'on relâche l'effort F après la coupure de l'alimentation électrique du moteur électrique 30 et de l'embrayage 38, l'effort de réaction qui s'exerce sur la vis 15 provoque sa mise en rotation car la libération de la première roue 31 rend à nouveau la vis 15 réversible et le desserrage des freins se produit par réaction à l'effort d'application des freins.

Le mécanisme de freinage selon l'invention peut être utilisé pour réaliser une action très rapide et efficace d'anti-blocage ou d'anti-enrayage des freins. Pour cela, lorsqu'il se produit une tendance au blocage de la ou des roue(s) freinée(s) par le mécanisme de freinage de l'invention, ce que l'on détecte en mesurant la décélération anormale de la roue et, le cas échéant, son glissement relatif par rapport au chemin de roulement, un organe central de surveillance du frein, en général un organe calculateur à microprocesseur, déclenche le desserrage alterné du frein.

Le desserrage est déclenché par désexcitation de l'embrayage 38, le moteur 30 restant alimenté. La désexcitation de l'embrayage 38 autorise la libre rotation de la vis 15 pendant que le moteur 30 entraîne seul l'écrou 13 par le pignon 26 et la roue 22. Après une brève phase de desserrage, l'embrayage 38 est réexcité quand le seuil du capteur 54 est atteint et l'ensemble vis-écrou 15, 13 reprend sa rotation différentielle, pour pousser à nouveau l'écrou 13 vers la gauche de la figure.

Au cours des phases alternatives d'excitation et de coupure de l'embrayage 38, ce qui produit un serrage lent du frein, le moteur 30 restant sous tension et en rotation dans le même sens au serrage comme au desserrage, l'embrayage 38 met en contact de friction le disque d'embrayage 36 et le plateau d'embrayage 37 qui tournent dans le même sens à des vitesses proches, et il est ainsi possible de faire battre l'embrayage à des fréquences élevées de l'ordre de 40 à 50 Hz.

On obtient ainsi, au cours des actions d'antiblocage ou d'anti-enrayage des freins, des effets d'application des freins qui oscillent, faiblement et d'une façon de plus en plus amortie au cours d'une phase d'antiblocage, autour d'une valeur moyenne d'effort correspondant sensiblement à l'adhérence instantanée disponible sous les roues du véhicule freiné.

On remarquera que l'élasticité de l'étrier de frein 5 et la compressibilité des garnitures de frein 2a donnent, en général, une élasticité suffisante au mécanisme de freinage selon l'invention pour que les serrages et desserrages progressifs du frein se traduisent par des angles de rotation non négligeables du moteur électrique 30 entre deux paliers d'efforts de freinage, ce qui peut diminuer l'hystérésis d'actionnement. Si l'élasticité du mécanisme d'actionnement se révélait insuffisante dans certaines applications, notamment avec des garnitures de frein très rigides, on pourrait prévoir une surface d'épaulement annulaire 25 du poussoir d'application 1 portée par une pièce de support guidée sur le corps dudit poussoir et susceptible de se déplacer d'une faible course par rapport à ce poussoir en écrasant, sous l'effort d'application du frein, des organes élastiques, par exemple au moins une rondelle Belleville.

Il serait aussi possible de remplacer le pignon 26 par une couronne dentée intérieurement et d'axe parallèle à celui de l'écrou 13.

## Revendications

1. Procédé d'actionnement d'un mécanisme de freinage comportant une vis (15) et un écrou (13) vissé sur cette vis et apte à venir en appui axial sur un poussoir (1) agissant sur des garnitures de frein (2) agencées pour venir s'appliquer sur une pièce à freiner (4), ladite vis étant entraînée par un moteur électrique (30) à une première vitesse angulaire, de manière à déplacer axialement l'écrou (13) et le poussoir (1) à une première vitesse linéaire suivant l'axe de la vis pour appliquer les garnitures (2) sur la pièce à freiner (4), **caractérisé en ce qu'**on entraîne simultanément l'écrou (13) à une deuxième vitesse angulaire, inférieure à la première, de manière à déplacer axialement le poussoir (1) à une vitesse linéaire différentielle proportionnelle à la différence de ces vitesses angulaires quand l'effort d'application des garnitures sur la pièce à freiner est en phase de croissance.

2. Procédé selon la revendication 1, caractérisé en ce qu'on couple la vis (15) à une roue d'engrenage (22) coaxiale entraînée par un moteur pour faire tourner la vis à la première vitesse angulaire, on mesure l'effort d'application des garnitures sur la pièce à freiner et on découple la roue d'engrenage de la vis quand cet effort dépasse un seuil prédéterminé.

3. Procédé selon la revendication 2, caractérisé en ce qu'on couple l'écrou (13) à une deuxième roue d'engrenage (31) coaxiale entraînée par ledit moteur pour faire tourner l'écrou (13) à la deuxième vitesse angulaire, on mesure l'effort appliqué sur la pièce à freiner et l'on supprime le couple d'entraînement du moteur quand cet effort devient nul, au cours d'une phase de desserrage total du mécanisme de freinage.

4. Procédé selon l'une quelconque des revendications 1 à 3, caractérisé en ce qu'on provoque une translation du poussoir (1) à faible vitesse dans le sens de l'application des garnitures de freinage quand l'effort d'application de ces garnitures sur la pièce à freiner est en phase de croissance, en choisissant des valeurs voisines pour la première et la deuxième vitesses angulaires.

5. Procédé selon la revendication 3, caractérisé en ce que la force de réaction à l'effort appliqué par les garnitures (2) sur la pièce à freiner (4) est transmise axialement par le poussoir (1) à la deuxième roue d'engrenage (31) pour coupler automatiquement par friction celle-ci en rotation à l'écrou.

6. Procédé selon l'une des revendications 1 à 5, caractérisé en ce que, pour réaliser un freinage de parc, on déclenche un freinage de service à vitesse linéaire différentielle, puis on immobilise mécaniquement en rotation la vis.

7. Procédé selon l'une des revendications 1 à 6, caractérisé en ce qu'on couple en rotation la vis (15) et le moteur (30) par excitation d'un embrayage électromagnétique (38).

8. Procédé selon la revendication 7, caractérisé en ce que l'écrou (13) est vissé sur la vis (15) de façon réversible, dans une condition de vissage direct non différentiel et en ce que, pour desserrer les freins, on déclenche d'abord le débrayage de l'embrayage (38), libérant ainsi la vis en rotation pour que la force de réaction appliquée sur le poussoir provoque la mise en rotation de la vis en direction du desserrage des freins.

9. Procédé selon l'une des revendications 7 ou 8, caractérisé en ce que l'on détecte l'effort axial d'application des garnitures du frein par la réaction appliquée à la vis et on débraye l'embrayage (38) lorsque l'effort d'application du frein dépasse une valeur de consigne ou de seuil prédéterminée.

10. Procédé conforme à l'une quelconque des revendications 7 à 9, caractérisé en ce qu'on désexcite et réexcite alternativement l'embrayage alors que le moteur (30) reste en phase motrice, au cours d'une phase d'enrayage ou de blocage de la ou les roue(s) d'un véhicule freiné par le mécanisme de freinage, de manière à provoquer alternativement le desserrage des freins par libération de la vis, suivi de la reprise du freinage par l'intermédiaire du moteur qui entraîne alors de nouveau le poussoir en translation à vitesse différentielle de serrage des freins.

11. Procédé conforme à la revendication 10, caractérisé en ce qu'on procède à des alternances rapides d'excitation-désexcitation de l'embrayage, de manière à transmettre à la vis d'un couple d'entraînement réduit correspondant sensiblement à l'adhérence disponible pour le freinage à friction sur les roues du véhicule freiné par le mécanisme de freinage.

12. Procédé conforme à l'une quelconque des revendications 6 à 9, caractérisé en ce qu'au cours d'une phase de desserrage total des freins, on débraye l'embrayage, on surveille l'effort axial d'application du frein et on coupe l'alimentation du moteur seulement lorsqu'on détecte un effort résiduel d'application faible ou nul, de manière à permettre l'entraînement en rotation de l'écrou par le moteur via la deuxième roue d'engrenage au cours du desserrage des freins sous l'effet de l'effort de réaction du poussoir d'application.

13. Dispositif pour la mise en oeuvre du procédé selon l'une quelconque des revendications 1 à 12, comprenant un poussoir mobile en translation pour appliquer des garnitures de frein sur au moins une pièce à freiner, un écrou susceptible de s'appuyer en translation sur ce poussoir et vissé sur une vis entraînée en rotation par une première roue d'engrenage coaxiale tournant à une première vitesse angulaire sous l'action d'un moteur, notamment d'un moteur électrique, pour déplacer l'écrou et le poussoir à une première vitesse linéaire, ce dispositif étant caractérisé en ce qu'il comprend une deuxième roue d'engrenage (22) entraînée par le même moteur (30) et montée à rotation sur l'écrou (13) coaxialement à celui-ci, un moyen (23, 24) pour coupler en rotation la deuxième roue (22) et l'écrou (13) sous l'action de l'effort transmis par le poussoir à cette roue d'engrenage quand les garnitures appliquent un effort sur la pièce à freiner, l'écrou (13) et la deuxième roue (22) étant alors entraînés en rotation par le moteur à une deuxième vitesse angulaire inférieure à la première vitesse angulaire pour déplacer l'écrou et le poussoir à une deuxième vitesse linéaire proportionnelle à la différence de ces vitesses angulaires, de manière à assurer, par effet différentiel, une amplification de l'effort d'application des garnitures de freinage.

14. Dispositif selon la revendication 13, caractérisé en ce qu'un pignon (26) assure simultanément la liaison du moteur (30) avec les première et deuxième roues d'engrenage (31, 22) montées coaxialement à la vis (15), le nombre de dents de la deuxième roue d'engrenage (22) étant très légèrement supérieur à celui de la première (31) pour autoriser la rotation coaxiale de ces deux roues malgré cette différence de nombre de dents.

15. Dispositif conforme à la revendication 14, caractérisé en ce que le vissage de la vis (15) dans l'écrou (13) est réalisé à l'aide d'un organe à filetage réversible, par exemple un chemin de billes (14), et en ce que la liaison entre l'arbre (27) du pignon (26) et la vis (15) via le pignon (26) et la première roue d'engrenage (31) comporte un embrayage (38) apte à être embrayé dans une phase de serrage des freins et à être débrayé dans une phase de desserrage des freins en autorisant la libre rotation de la vis (15) alors réversible, sous l'effet de la force de réaction exercée sur le poussoir d'application (1).

16. Dispositif conforme à la revendication 15, caractérisé en ce que l'embrayage (38) est couplé à un organe de blocage mécanique de l'embrayage en position embrayée ou est doublé en parallèle par un organe dembrayage (38) mécanique (35) et ledit organe de blocage ou d'embrayage mécanique est susceptible d'être actionné pour maintenir solidaire en rotation dans le temps, l'écrou (13) et la vis (15) rendue alors irréversible par l'effet différentiel dû au couplage des deux roues d'engrenage (22, 31) sur le même pignon (26), et s'opposer ainsi mécaniquement au desserrage du frein serré initialement par voie électrique.

17. Dispositif conforme à l'une des revendications 15 ou 16, caractérisé en ce que la première roue d'engrenage (31) est montée folle sur la vis (15) et est susceptible d'être reliée en rotation à la vis par l'embrayage (38).

18. Dispositif selon l'une des revendications 15 ou 16, caractérisé en ce que la première roue d'engrenage (31) est solidaire en rotation de la vis (15) et engrène avec une partie (42) du pignon qui est susceptible d'être reliée en rotation à l'arbre (27) du pignon (26) par l'intermédiaire de l'embrayage (38).

19. Dispositif selon l'une des revendications 15 à 18, caractérisé en ce que l'embrayage est un embrayage électromagnétique (38) à actionnement électrique et à faible temps de réponse.

20. Dispositif selon l'une des revendications 13 à 19, caractérisé en ce que la deuxième roue d'engrenage (22) est susceptible d'être pincée entre la surface annulaire d'épaulement (23) de l'écrou et une couronne d'organes de roulement (24), par exemple des billes ou des galets ou des aiguilles, en appui sur la surface d'épaulement annulaire (25) du poussoir d'application (1) entourant une partie de l'écrou (13).

21. Dispositif selon l'une des revendications 13 à 20, caractérisé en ce qu'un ressort de compression (18) est interposé entre une surface de butée (19) du poussoir d'application (1) et l'écrou (13), de manière à repousser cet écrou au contact d'une butée interne (17) solidaire dudit poussoir et à créer un couple de friction minimal faible entre l'écrou et le poussoir d'application (1).

22. Dispositif conforme à l'une quelconque des revendications 14 à 21, caractérisé en ce qu'une couronne dentée intérieurement est substituée au pignon (26) pour assurer la liaison du moteur (30) avec les première et deuxième roues d'engrenage (31, 22).

## Claims

1. Method of actuation of a braking mechanism comprising a screw (15) and a nut (13) screwed on this screw and able to press axially on a plunger (1) acting on brake pads (2) arranged so as to be applied on a member to be braked (4), the said screw being driven by an electric motor (30) at a first angular speed, so as to displace the nut (13) and the plunger (1) at a first linear speed according to the axis of the screw in order to apply the pads (2) to the member to be braked (4), characterized in that, simultaneously, the nut (13) is driven at a second angular speed less than the first, so as to move the plunger (1) axially at a linear speed differentially proportional to the difference of these angular speeds when the application load of the brake pads on the member to be braked is in the increasing phase.

2. Method according to Claim 1, characterized in that the screw (15) is coupled to a coaxial gearwheel (22) driven by a motor to make the screw turn at the first angular speed, the application load of the brake pads on the member to be braked is measured and the gearwheel is disconnected from the screw when this load exceeds a predetermined threshold.

3. Method according to Claim 2, characterized in that the nut (13) is coupled to a second coaxial gearwheel (31) driven by the said motor to make the nut (13) turn at the second angular speed, the load applied on the member to be braked is measured and the driving couple of the motor is discontinued when this load becomes zero during a total release phase of the braking mechanism.

4. Method according to any of Claims 1 to 3, characterized in that a translation of the plunger (1) at slow speed is induced in the direction of application of the brake pads when the application load of these brake pads on the member to be braked is in the increasing phase, by choosing closely related values for the first and the second angular speeds.

5. Method according to Claim 3, characterized in that the force of reaction to the load applied by the brake pads (2) on the member to be braked is transmitted axially by the plunger (1) to the second gearwheel (31) in rotation to connect this automatically to the nut by friction.

6. Method according to any of Claims 1 to 5, characterized in that a service braking is triggered at differential linear speed to make a parking brake then the screw is locked in rotation mechanically.

7. Method according to any of Claims 1 to 6, characterized in that the screw (15) and the motor (30) are coupled in rotation by excitation of an electro-magnetic clutch (38).

8. Method according to Claim 7, characterized in that the nut (13) is screwed on the screw (15) in a reversible manner, in direct non-differential screwing manner and in that, to release the brakes, the disengagement of the clutch (38) is first of all triggered thus freeing the screw in rotation in order that the force of reaction applied to the plunger causes the screw to start rotating in the direction of release of the brakes.

9. Method according to either of Claims 7 to 8, characterized in that the axial application load of the brake pads is detected by the reaction applied to the screw and the clutch (38) is disengaged when the application load of the brake exceeds a predetermined instruction or threshold value.

10. Method according to any of Claims 7 to 9, characterized in that the clutch is de-excited and re-excited alternately while the motor (30) remains in driving phase, during a skidding phase or locking of the wheel or wheels of a braked vehicle by the braking mechanism, so as to cause alternately the release of the brakes by freeing the screw, followed by reapplication of braking the motor which then once again drives the plunger in translation at differential speed for brake application.

11. Method conforming to Claim 10, characterized in that fast alternations of excitation-de-excitation of the clutch are made, so as to transmit a reduced driving couple to the screw corresponding closely to the grip available for the friction braking on the wheels of a braked vehicle by the braking mechanism.

12. Method according to any of Claims 6 to 9, characterized in that during a total release phase of the brakes, the clutch is disengaged, the axial application load of the brake is monitored and the current supply to the motor is cut off only when a low or zero residual application load is detected, so as to enable the motor to drive the nut in rotation via the second gearwheel during release of the brakes under the effect of the reaction force of the application plunger.

13. Device for implementing the method according to any of Claims 1 to 12, comprising a plunger moving in translation to apply the brake pads on at least one member to be braked, a nut able to press on this plunger in translation and screwed on a screw driven in rotation by a first coaxial gearwheel turning at a first angular speed due to the action of a motor, particularly an electric motor, to move the nut and the plunger at a first linear speed, this device being characterized in that it comprises a second gearwheel (22) driven by the same motor (30) and fitted to rotate on the nut (13) coaxial to it, a means (23, 24) of connecting the second wheel (22) and the nut (13) in rotation due to the action of the load transmitted by the plunger to this gearwheel when the brake pads apply a load on the member to be braked, the nut (13) and the second wheel (22) then being driven in rotation by the motor at a second angular speed less than the first angular speed to move the nut and the plunger at a second linear speed proportional to the difference of these angular speeds, so as to ensure an amplification of the application load of the brake pads by differential effect.

14. Device according to Claim 13 characterised in that a pinion (26) ensures the connection of the motor (30) simultaneously with the first and second gearwheels (31, 22) fitted coaxially to the screw (15), the number of teeth of the second gearwheel (22) being very slightly more than that of the first (31) to permit the coaxial rotation of these two wheels in spite of this difference in the number of teeth.

15. Device according to Claim 14, characterised in that the screwing of the screw (15) in the nut (13) is achieved by means of a member with reversible thread, for example a ball bearing track (14), and in that the connection between the shaft (27) of the pinion (26) and the screw (15) via the pinion (26) and the first gear-wheel (31) comprises a clutch (38), able to be engaged in an application phase of the brakes and to be disengaged in a releasing phase of the brakes by permitting the free rotation of the screw (15) then reversible, due to the effect of the reaction force exerted on the application plunger (1).

16. Device according to Claim 15, characterized in that the clutch (38) is coupled to a mechanical locking member of the clutch in the engaged position or is duplicated in parallel by a mechanical (35) clutch unit (38) and the said locking member or mechanical clutch is capable of being actuated to keep the nut (13) and the screw (15) integral in rotation in course of time, the nut (13) and the screw (15) then made irreversible by the differential effect due to the coupling of the two gearwheels (22, 31) on the same pinion (26), and thus to resist mechanically the release of the brake applied initially by electrical means.

17. Device according to either of Claims 15 or 16, characterized in that the first gearwheel (31) is fitted idling on the screw (15) and is able to be connected in rotation to the screw by the clutch (38).

18. Device according to either of Claims 15 or 16, characterized in that the first gearwheel (31) is integral in rotation with the screw (15) and meshes with a part (42) of the pinion which is able to be connected in rotation to the shaft (27) of the pinion (26) via the clutch (38).

19. Device according to any of Claims 15 to 18, characterized in that the clutch is an electro-magnetic clutch (38) with electrical actuation and a low response time.

20. Device according to any of Claims 13 to 19, characterized in that the second gearwheel (22) is able to be gripped between the annular shoulder surface (23) of the nut and a ring of bearing components (24), for example balls or rollers or needles, pressing on the annular shoulder surface (25) of the application plunger (1) surrounding a part of the nut (13).

21. Device according to any of Claims 13 to 20, characterized in that a compression spring (18) is inserted between a thrust surface (19) of the application plunger (1) and the nut (13), so as to push this nut back into contact with an internal stop (17) integral with the said plunger and to create a couple of minimum low friction between the nut and the application plunger (1).

22. Device according to any of Claims 14 to 21, characterized in that an internally toothed ring is substituted for pinion (26) to ensure the connection of the motor (30) simultaneously with the first and second gearwheels (31, 22).

## Ansprüche

1. Verfahren zur Betätigung eines Bremsmechanismus mit einer Schraube (15) und einer Mutter (13), die auf diese Schraube geschraubt ist und dazu geeignet ist, sich in axialer Richtung auf einer Druckvorrichtung (1) abzustützen, die auf Bremsbeläge (2) wirkt, die so angeordnet sind, daß sie auf ein zu bremsendes Teil (4) wirken, wobei die Schraube von einem Elektromotor (30) mit einer ersten Winkelgeschwindigkeit angetrieben wird, so daß die Mutter (13) und die Druckvorrichtung (1) mit einer ersten linearen Geschwindigkeit entlang der Achse der Schraube verschoben werden, um die Beläge (2) auf das zu bremsende Teil (4) wirken zu lassen, dadurch gekennzeichnet, daß die Mutter (13) gleichzeitig mit einer zweiten Winkelgeschwindigkeit angetrieben wird, die kleiner als die erste ist, so daß die Druckvorrichtung (1) in axialer Richtung mit einer linearen Differentialgeschwindigkeit angetrieben wird, die proportional zum Unterschied dieser Winkelgeschwindigkeiten ist, wenn sich der durch die Wirkung der Beläge auf das zu bremsende Teil verursachte Druck in der Zunahmephase befindet.

2. Verfahren gemäß Anspruch 1, dadurch gekennzeichnet, daß die Schraube (15) mit einem koaxialen Zahnrad (22) gekoppelt ist, das von einem Motor angetrieben wird, um die Schraube mit der ersten Winkelgeschwindigkeit zu drehen, daß der durch die Wirkung der Beläge auf das zu bremsende Teil verursachte Druck gemessen wird und das Zahnrad von der Schraube entkoppelt wird, wenn dieser Druck einen vorgegebenen Schwellenwert übersteigt.

3. Verfahren gemäß Anspruch 2, dadurch gekennzeichnet, daß die Mutter (13) mit einem zweiten koaxialen Zahnrad (31) gekoppelt ist, das von dem Motor angetrieben wird, um die Mutter (13) mit der zweiten Winkelgeschwindigkeit zu drehen, daß der auf das zu bremsende Teil ausgeübte Druck gemessen wird und die Kopplung mit dem Motorantrieb verhindert wird, wenn das Antriebsdrehmoment des Motors aufgehoben wird, wenn dieser Druck im Verlauf einer Phase der vollständigen Lösung des Bremsmechanismus Null wird.

4. Verfahren gemäß einem der Ansprüche 1 bis 3, dadurch gekennzeichnet, daß eine Verschiebung der Druckvorrichtung (1) mit kleiner Geschwindigkeit in Richtung der Wirkung der Bremsbeläge hervorgerufen wird, wenn sich der durch die Wirkung dieser Beläge auf das zu bremsende Teil verursachte Druck in der Zunahmephase befindet, wobei für die erste und für die zweite Winkelgeschwindigkeit ähnliche Werte gewählt werden.

5. Verfahren gemäß Anspruch 3, dadurch gekennzeichnet, daß die Gegenkraft zum durch die Wirkung der Beläge (2) auf das zu bremsende Teil verursachten Druck von der Druckvorrichtung (1) in axialer Richtung auf das zweite Zahnrad (31) übertragen wird, um dieses automatisch mit der Drehung der Mutter reibschlüssig zu koppeln.

6. Verfahren gemäß einem der Ansprüche 1 bis 5, dadurch gekennzeichnet, daß zur Bewerkstelligung einer Standbremse eine Betriebsbremse mit der linearen Differentialgeschwindigkeit betätigt wird und dann die Schraube rotationsmäßig mechanisch unbeweglich gemacht wird.

7. Verfahren gemäß einem der Ansprüche 1 bis 6, dadurch gekennzeichnet, daß die Schraube (15) rotationsmäßig mit dem Motor (30) durch Einschalten einer elektromagnetischen Kupplung (38) gekoppelt wird.

8. Verfahren gemäß Anspruch 7, dadurch gekennzeichnet, daß die Mutter (13) umschaltbar unter einer direkten, nicht differentiellen Schraubbedingung auf die Schraube (15) geschraubt wird und daß zur Lösung der Bremsen vorher das Auskuppeln der Kupplung (38) bewirkt wird, um so die Drehung der Schraube freizugeben, damit die auf die Druckvorrichtung ausgeübte Gegenkraft die Drehung der Schraube in Richtung der Lösung der Bremsen bewirken kann.

9. Verfahren gemäß einem der Ansprüche 7 oder 8, dadurch gekennzeichnet, daß der durch die Wirkung der Bremsbeläge verursachte axiale Druck durch die auf die Schraube ausgeübte Wirkung ermittelt wird und die Kupplung (38) ausgekuppelt wird, wenn der durch die Bremswirkung verursachte Druck einen Einstellwert oder einen vorgegebenen Schwellenwert übersteigt.

10. Verfahren gemäß einem der Ansprüche 7 bis 9, dadurch gekennzeichnet, daß die Kupplung abwechselnd ausgeschaltet und erneut eingeschaltet wird, während der Motor (30) im Verlauf einer Sperr- oder Blockierphase des oder der Räder eines durch den Bremsmechanismus gebremsten Fahrzeugs in der Antriebsphase bleibt, so daß abwechselnd die Lösung der Bremsen durch die Freigabe der Schraube, gefolgt von der erneuten Bremsbetätigung durch die Zwischenschaltung des Motors, der nun erneut die Druckvorrichtung für eine Verschiebung mit der Differentialgeschwindigkeit zur Betätigung der Bremsen antreibt, bewirkt wird.

11. Verfahren gemäß Anspruch 10, dadurch gekennzeichnet, daß das Einschalten/Ausschalten der Kupplung mit schneller Wechselfolge ausgeführt wird, so daß auf die Schraube ein verringertes Antriebsmoment übertragen wird, das im wesentlichen der verfügbaren Reibungskraft für die mittels Reibung ausgeführte Bremsung der Räder des durch den Bremsmechanismus gebremsten Fahrzeugs entspricht.

12. Verfahren gemäß einem der Ansprüche 6 bis 9, dadurch gekennzeichnet, daß im Verlauf einer Phase der vollständigen Lösung der Bremsen die Kupplung ausgekuppelt wird, der durch die Bremsbetätigung verursachte axiale Druck überwacht wird und die Versorgung des Motors nur dann unterbrochen wird, wenn ein geringer oder kein verbleibender Wirkdruck festgestellt wird, so daß im Verlauf der Lösung der Bremsen unter der Wirkung des Gegendrucks der Druckvorrichtung der Drehantrieb der Mutter durch den Motor über das zweite Zahnrad ermöglicht wird.

13. Vorrichtung zum Ausführen des Verfahrens gemäß einem der Ansprüche 1 bis 12, mit einer verschiebbar beweglichen Druckvorrichtung, um auf wenigstens ein zu bremsendes Teil Bremsbeläge wirken zu lassen, einer Mutter, die sich in Verschiebungsrichtung an der Druckvorrichtung abstützen kann und auf eine Schraube geschraubt ist, die durch ein erstes koaxiales Zahnrad, das sich unter der Wirkung eines Motors, insbesondere eines Elektromotors, mit einer ersten Winkelgeschwindigkeit dreht, in Drehrichtung angetrieben wird, um die Mutter und die Druckvorrichtung mit einer ersten linearen Geschwindigkeit zu verschieben, wobei die Vorrichtung dadurch gekennzeichnet ist, daß sie ein zweites Zahnrad (22), das vom gleichen Motor (30) angetrieben wird und drehbar an der Mutter (30) koaxial zu dieser angebracht ist, und ein Mittel (23, 24) zur Drehkopplung des zweiten Rades (22) und der Mutter (13) unter der Wirkung des durch die Druckvorrichtung auf dieses Zahnrad übertragenen Druckes, wenn die Beläge einen Druck auf das zu bremsende Teil ausüben, umfaßt, wobei die Mutter (13) und das zweite Rad (22) nun durch den Motor mit einer zweiten Winkelgeschwindigkeit, die kleiner als die erste Winkelgeschwindigkeit ist, in Drehrichtung angetrieben werden, um die Mutter und die Druckvorrichtung mit einer zweiten linearen Geschwindigkeit, die proportional zur Differenz dieser Winkelgeschwindigkeiten ist, so zu verschieben, daß durch die Differentialwirkung eine Verstärkung des Wirkdruckes der Bremsbeläge gewährleistet wird.

14. Vorrichtung gemäß Anspruch 13, dadurch gekennzeichnet, daß ein Ritzel (26) gleichzeitig die Verbindung des Motors (30) mit dem ersten und dem zweiten Zahnrad (31, 22), die koaxial zur Schraube (15) angebracht sind, gewährleistet, wobei die Zahl der Zähne des zweiten Zahnrades (22) sehr wenig höher als diejenige des ersten (31) ist, um die koaxiale Drehung dieser zwei Räder trotz dieses Unterschiedes zwischen den Zahlen der Zähne zu bewirken.

15. Vorrichtung gemäß Anspruch 14, dadurch gekennzeichnet, daß die Verschraubung der Schraube (15) mit der Mutter (13) mit Hilfe eines Elementes mit Umschaltgewinde, beispielsweise einer Kugelkette (14), bewerkstelligt wird und daß die Verbindung zwischen der Achse (27) des Ritzels (26) und der Schraube (15) über das Ritzel (26) und das erste Zahnrad (31) eine Kupplung (38) umfaßt, die dazu geeignet ist, in einer Betätigungsphase der Bremsen eingekuppelt und in einer Lösungsphase der Bremsen ausgekuppelt zu werden, wobei unter der Wirkung der Gegenkraft, die auf die Wirkdruckvorrichtung (1) ausgeübt wird, die freie Drehung der nun umgeschalteten Schraube (15) bewirkt wird.

16. Vorrichtung gemäß Anspruch 15, dadurch gekennzeichnet, daß die Kupplung (38) mit einem Element zum mechanischen Blockieren der Kupplung in der eingekuppelten Position gekoppelt ist oder durch ein mechanisches (35) Kupplungselement (38) parallel verdoppelt ist und das Element zum mechanischen Blockieren oder Einkuppeln dazu geeignet ist, so betätigt zu werden, daß es die Mutter (13) und die Schraube (15), die nun durch die Differentialwirkung aufgrund der Kopplung der zwei Zahnräder (22, 31) auf demselben Ritzel (26) unumschaltbar bleibt, in Drehrichtung relativ zueinander unbeweglich hält und sich somit mechanisch der Lösung der anfangs auf elektrischem Wege betätigten Bremse entgegensetzt.

17. Vorrichtung gemäß einem der Ansprüche 15 oder 16, dadurch gekennzeichnet, daß das erste Zahnrad (31) an der Schraube (15) freilaufend angebracht ist und dazu geeignet ist, durch die Kupplung (38) mit der Schraube rotationsmäßig verbunden zu werden.

18. Vorrichtung gemäß einem der Ansprüche 15 oder 16, dadurch gekennzeichnet, daß das erste Zahnrad (31) in Drehrichtung relativ zur Schraube (15) unbeweglich ist und in einen Teil (42) des Ritzels eingreift, der dazu geeignet ist, über die dazwischengeschaltete Kupplung (38) rotationsmäßig mit der Achse (27) des Ritzels (26) verbunden zu werden.

19. Vorrichtung gemäß einem der Ansprüche 15 bis 18, dadurch gekennzeichnet, daß die Kupplung eine elektromagnetische Kupplung (38) mit elektrischer Betätigung und geringer Ansprechzeit ist.

20. Vorrichtung gemäß einem der Ansprüche 13 bis 19, dadurch gekennzeichnet, daß das zweite Zahnrad (22) dazu geeignet ist, zwischen die ringförmige Oberfläche einer Schulter (23) der Mutter und einen Kranz der Rollelemente (24), beispielsweise von Kugeln oder von Rollen oder von Nadeln, geklemmt zu werden, wobei es sich auf der Oberfläche der ringförmigen Schulter (25) der einen Teil der Mutter (13) umgebenden Wirkdruckvorrichtung (1) abstützt.

21. Vorrichtung gemäß einem der Ansprüche 13 bis 20, dadurch gekennzeichnet, daß zwischen eine Anschlagoberfläche (19) der Wirkdruckvorrichtung (1) und die Mutter (13) eine Kompressionsfeder (18) so eingesetzt ist, daß sie diese Mutter, die sich mit einem einteilig mit der Druckvorrichtung ausgebildeten, inneren Anschlag (17) in Kontakt befindet, zurückdrückt und einen kleinstmöglichen Reibschluß zwischen der Mutter und der Wirkdruckvorrichtung (1) erzeugt.

22. Vorrichtung gemäß einem der Ansprüche 14 bis 21, dadurch gekennzeichnet, daß das Ritzel (26) durch einen Innenzahnkranz ersetzt wird, um die Verbindung des Motors (30) mit dem ersten und mit dem zweiten Zahnrad (31, 22) zu gewährleisten.

FIG.1

FIG.2

FIG.4

FIG.5

EP 0 275 783 B1

FIG.3

EP 0 275 783 B1